# EUROPÄISCHE PATENTANMELDUNG

(11) **EP 0 901 912 A2**
(43) Veröffentlichungstag der Anmeldung: **17.03.1999**
(21) Anmeldenummer: 98116165.6
(22) Anmeldetag: 27.08.1998
(51) Int. Cl.: B60B 31/02

(54) **Vorrichtung zum Einspeichen eines Rades**

(30) Priorität: 09.09.1997 DE 19739365
(71) Anmelder: Golz, Günter, 33449 Langenberg (DE)
(72) Erfinder: Golz, Günter, 33449 Langenberg (DE)
(74) Vertreter: Patentanwälte Rehberg + Hüppe

(57) **Zusammenfassung**

Eine Vorrichtung zum Einspeichen eines Rades aus einer Felge, einer Nabe und einer Mehrzahl von Speichen und Nippeln, ist mit einer Aufnahmeeinrichtung zum ungefähren Festlegen der Achse der Nabe, drei Führungsrollen für eine drehbare Lagerung der Felge mit etwa horizontal angeordneter Laufradebene (25), einem in eine Schraubstelle (24) einschwenkbaren Positionieranschlag (11) für das mit Gewinde versehene Ende der Speiche sowie einem in einer Arbeitsachse (9) in Aufdrehrichtung verfahrbarer Schrauber (12) zum Aufdrehen der Nippel und einem angetriebenen Lochsucher (10) für die Löcher in der Felge versehen, der in der gemeinsamen Arbeitsachse (9) des Schraubers (12) und des Positionieranschlages (11) verfahrbar und aus dieser Arbeitsachse (9) herausfahrbar vorgesehen ist. Es ist eine relativ zu der durch die drei Führungsrollen festgelegten Laufradebene (25) höhenveränderlich geführte Führungsschiene (8) zur Aufnahme des Schraubers (12) und des Lochsuchers (10) vorgesehen, die auf zwei in Richtung der Führungsschiene (8) beabstandet angeordneten Lagern (7, 17) schwenkbar gelagert ist. Das der Schraubstelle (24) abgekehrte Lager (17) der Führungsschiene (8) ist auf zwei in Reihe angeordneten hinteren Zylindern (14, 15) maschinenfest abgestützt. Das der Schraubstelle (24) zugekehrte Lager (7) der Führungsschiene (8) ist auf zwei in Reihe angeordneten vorderen Zylindern (4, 5) abgestützt, wobei die vorderen Zylinder (4, 5) auf einem Stellmotor (22) abgestützt sind. Der Lochsucher (10) ist um eine Querachse (31) schwenkbar gegenüber der Führungsschiene (8) angeordnet und mit einer den Lochversatz ermittelnden Meßeinrichtung (27) verbunden. Der Stellmotor (22) ist über das den Lochversatz wiedergebende Signal der Meßeinrichtung (27) zum Ausgleich des Lochversatzes durch Verschwenken der Führungsschiene (8) betätigbar.

## Beschreibung

Die Erfindung bezieht sich auf eine Vorrichtung zum Einspeichen eines Rades aus einer Felge, einer Nabe und einer Mehrzahl von Speichen und Nippeln, mit einer Aufnahmeeinrichtung zum ungefähren Festlegen der Achse der Nabe, drei Führungsrollen für eine drehbare Lagerung der Felge mit etwa horizontal angeordneter Laufradebene, einem in eine Schraubstelle einschwenkbaren Positionieranschlag für das mit Gewinde versehene Ende der Speiche sowie einem in einer Arbeitsachse in Aufdrehrichtung verfahrbarer Schrauber zum Aufdrehen der Nippel und einem angetriebenen Lochsucher für die Löcher in der Felge, der in der gemeinsamen Arbeitsachse des Schraubers und des Positionieranschlages verfahrbar und aus dieser Arbeitsachse herausfahrbar vorgesehen ist. Die Erfindung läßt sich für Drahtspeichenräder aller Art anwenden, beispielsweise für Vorderräder, aber auch für angetriebene Hinterräder von Fahrrädern, Rollstühlen und dgl. In der vorliegenden Erfindung geht es um das Einspeichen eines Rades, also um den Zusammenbau von Felge, Nabe, Speichen und Nippeln, wobei die Nippel auf die mit Gewinde versehenen Enden der Speichen nur um einige wenige Umdrehungen aufgedreht werden, so daß jedenfalls noch keine feste und endgültige Spannung in den Speichen entsteht, jedoch die zugehörige Relativlage zwischen Speiche, Nippel und Felge mit der jeweiligen Überkreuzung der Speichen untereinander sowie eine gewisse Spannung der Speichen, jedoch mit ggfs. Seiten- und/oder Hohenschlägen der Felge festgelegt ist. Es versteht sich, daß zum Zusammenbau eines fertigen Rades diesem Einspeichvorgang ein Zentrier- und Spannvorgang und dabei ggfs. ein Korrekturvorgang für einen Höhen- und/oder Seitenschlag folgen muß.

Eine Vorrichtung zum Einspeichen eines Rades mit den im Oberbegriff des Anspruchs 1 angegebenen Merkmalen ist aus der DE 195 32 429 A1 bekannt. Dabei ist eine Aufnahmeeinrichtung zum ungefähren Festlegen der Achse der Nabe, drei Führungsrollen für eine drehbare Lagerung der Felge, ein Positionieranschlag für das mit Gewinde versehne Ende der Speiche sowie ein axial in Aufdrehrichtung verfahrbarer Schrauber zum Aufdrehen der Nippel um einige wenige Umdrehungen an einem gemeinsamen Rahmen vorgesehen. Ein angetriebener Lochsucher für die Löcher in der Felge ist in der gemeinsamen Arbeitsachse des Schraubers und des Positionieranschlages verfahrbar und aus dieser Arbeitsachse herausfahrbar am Rahmen vorgesehen. Die Nabe wird mit den eingefädelten Speichen einerseits und die Felge andererseits zunächst in eine ungefähr konzentrische Relativlage zueinander gebracht. Die Felge wird in Dreipunktauflagerung so um ihre Achse gedreht, daß eines der Löcher in der Felge in eine solche Position gebracht wird, bei der das Loch mit der gemeinsamen festgelegten Arbeitsachse eines Schraubers und eines Positionieranschlages für das mit Gewinde versehene Ende der Speiche fluchtet. Die Speiche wird von Hand mit ihrem mit Gewinde versehenen Ende auf den Positionieranschlag gedrückt und der Nippel durch das Loch in der fixierten Felge hindurch mit dem Schrauber auf das mit Gewinde versehene Ende der Speiche aufgedreht. Mit der Felge und den anderen Speichen und Nippeln wird entsprechend verfahren. Der Lochsucher wird in einer Ebene parallel zu der Laufradebene bewegt. Damit bleibt die Schräglage der Speichen relativ zur Laufradebene unberücksichtigt. Insbesondere bei Tiefbett-Hohlkammerfelgen werden die Durchgangslöcher entsprechend der Schräglage der Speichen versetzt zu den Nippellöchern gebohrt. Der Lochsucher hat dann Schwierigkeiten, in die Durchgangslöcher und/oder die Nippellöcher einzufahren. Es besteht die Gefahr, daß er auf dem jeweiligen Rand des betreffenden Loches aufsetzt, so daß ein Fehler entsteht. Selbst wenn der Lochsucher letstendlich das Nippelloch erreicht, steht die Arbeitsachse in einem Winkel zu der Achse des Nippelloches und damit zu der Achse des Nippels, so daß dessen Ergreifen mit der Klinge des Schraubers zu einem Abschalten der Vorrichtung führen kann.

Der Erfindung liegt die Aufgabe zugrunde, eine Vorrichtung der eingangs beschriebenen Art aufzuzeigen, die Lei Felgen beliebiger Gestaltung, insbesondere auch bei Tiefbett-Hohlkammerfelgen, problemlos arbeitet.

Erfindungsgemäß wird dies bei einer Vorrichtung der eingangs beschriebenen Art dadurch erreicht, daß eine relativ zu der durch die drei Führungsrollen festgelegten Laufradebene höhenveränderlich geführte Führungsschiene zur Aufnahme des Schraubers und des Lochsuchers vorgesehen ist, die auf zwei in Richtung der Führungsschiene beabstandet angeordneten Lagern schwenkbar gelagert ist, daß das der Schraubstelle abgekehrte Lager der Führungsschiene auf zwei in Reihe angeordneten hinteren Zylindern maschinenfest abgestützt ist, daß das der Schraubstelle zugekehrte Lager der Führungsschiene auf zwei in Reihe angeordneten vorderen Zylindern abgestützt ist, wobei die vorderen Zylinder auf einem Stellmotor abgestützt sind, daß der Lochsucher um eine Querachse schwenkbar gegenüber der Führungsschiene angeordnet und mit einer den Lochversatz ermittelnden Meßeinrichtung verbunden ist, und daß der Stellmotor über das den Lochversatz wiedergebende Signal der Meßeinrichtung zum Ausgleich des Lochversatzes durch Verschwenken der Führungsschiene betätigbar ist.

Die Erfindung geht von dem Gedanken aus, den Schrauber und den Lochsucher auf einer Führungsschiene zu lagern und relativ zu dieser Führungsschiene zu bewegen, wobei die Führungsschiene selbst in ihrer Neigung relativ zur Laufradebene verstellbar ist. Damit wird eine Anpassung an die Schräglage der Speichen relativ zur Laufradebene erreicht. Es genügt im allgemeinen, für die Führungsschiene drei unterschiedliche Stellungen vorzusehen, nämlich eine Mittelstellung, in der die Führungsschiene mit der Laufradebene fluchtet, und zwei daran jeweils anschließende Stellungen, in denen je eine Schräglage zu der Laufradebene erreicht wird, und zwar derart, daß die Führungsschiene mit der Schräglage der Speichen der einen und der anderen Laufradseite fluchtet. Zwar müßte die Führungsschiene bzw. der Lochsucher und der Schrauber mit seinem vorderen Ende gleichsam gelenkig geführt werden. Dies ist aus konstruktiven Gründen nicht möglich. Insoweit werden zwei Lager für die Führungsschiene gebildet, von denen das erste Lager, welches der Schraubstelle zugekehrt ist, auf vorderen Zylindern abgestützt, während das hintere Lager ebenfalls auf zwei hinteren Zylindern abgestützt ist. Durch die Betätigung dieser Zylinder können die drei beschriebenen Stellungen der Führungsschiene und damit der Arbeitsachse des Lochsuchers und des Schraubers gleichsam voreingestellt werden. Es versteht sich, daß an einer realen Felge dann immer noch Toleranzen auftreten, die durch das Bohren der Durchgangslöcher und/oder der Nippellöcher verursacht sind. Diese Toleranzen werden als Lochversatz bezeichnet. Der Lochsucher ist zusätzlich um eine Querachse zur Arbeitsachse der Führungsschiene schwenkbar und mit einer diesen Lochversatz ermittelnden Meßeinrichtung verbunden. Die vorderen Zylinder für die gelenkige Auflagerung der Führungsschiene sind auf einem Stellmotor abgestützt, der von dem über die Meßeinrichtung ermittelten Lochversatz gesteuert wird. Dies bedeutet, daß die Schräglage oder Relativlage der Arbeitsachse zur Laufradebene über den Stellmotor zum Ausgleich der Toleranzen noch verändert, d. h. nachgestellt wird. Dies geschieht an jedem einzelnen Loch, so daß hiermit die Arbeitsachse individuell auf jedes Loch eingestellt wird. Dies erhöht die Betriebssicherheit erheblich.

Wenn die Querachse und die Arbeitsachse des Lochsuchers einander schneidend angeordnet sind, ergeben sich besonders gute Arbeitsergebnisse im Hinblick auf den individuellen Lochversatz bzw. die Toleranzen. Die Nachstellung ist nach beiden Seiten möglich.

Zwei der drei Führungsrollen sind benachbart zu der Schraubstelle und die dritte Führungsrolle mit ihrer Drehachse etwa die Arbeitsachse schneidend angeordnet. Die Anordnung der Führungsrollen ist also anders als im Stand der Technik. Zwei der Führungsrollen sind benachbart zu der Schraubstelle vorgesehen, um hier möglichst konstante Bedingungen für die Relativpositionierung der Felge zu schaffen, während in Verbindung damit die dritte Führungsrolle letztlich die Laufradebene festlegt. Keine der Führungsrollen ist höhenveränderlich vorgesehen, so daß die Laufradebene auch beim Wechsel des Einspeichens von Speichen der einen Seite auf Speichen der anderen Seite nicht verändert wird. Die Veränderung der Schräglage der Arbeitsachse zur Laufradebene erfolgt auf der Seite der Führungsschiene. Es wäre natürlich auch möglich, zu diesem Zweck die Laufradebene zu verstellen und die Nachstellung der Arbeitsachse im Bereich der Führungsschiene anzuordnen.

Die Leiden benachbart zu der Schraubstelle angeordneten Führungsrollen sind symmetrisch zu einer Vertikalebene durch die Arbeitsachse verstellbar. Hierdurch erfolgt eine Anpassung an den Laufraddurchmesser bzw. eine Positionierung der Felge in der Arbeitsachse an der Schraubstelle.

Eine der Führungsrollen benachbart zu der Schraubstelle ist mit einem Antrieb versehen. Dies bedeutet, daß die Felge beim Einspeichen aktiv angetrieben wird, so daß die den Einspeichvorgang durchführende Person von der Drehung der Felge entlastet wird und nur noch die Speichen nacheinander auf den Positionieranschlag halten muß, bis der jeweilige Nippel aufgesetzt ist und gefaßt hat.

Die dritte Führungsrolle und die Aufnahmeeinrichtung für die Nabe sind in Richtung der Arbeitsachse gemeinsam verstellbar, wobei die Aufnahmeeinrichtung für die Nabe mit vergleichsweise halbem Verstellweg gekoppelt ist. Die Kopplung kann durch zwei Gewindestangen, deren Steigungen im Verhältnis 1 : 2 stehen, erfolgen. Aber auch andere Realisierungsmöglichkeiten bieten sich dem Fachmann an. Damit ist sichergestellt, daß die Felge immer an der gleichen Schraubstelle der Arbeitsachse mit ihrem gerade aufzusetzenden Nippel zur Bearbeitung kommt, unabhängig von dem Laufraddurchmesser.

Zwischen der Meßeinrichtung für den Lochversatz und dem Stellmotor für das Auflager der beiden vorderen Zylinder kann eine Übersetzungseinrichtung vorgesehen sein. Diese Übersetzungseinrichtung berücksichtigt die konstruktiv mögliche Verschwenkbarkeit der Führungsschiene bzw. der Arbeitsachse derart, daß der ermittelte Lochversatz an der Schraubstelle wegverstellt wird.

Der Schrauber kann auf einem auf der Führungsschiene in der Arbeitsachse verfahrbaren ersten Schlitten gelagert sein. Der Lochsucher ist auf einem auf der Führungsschiene in der Arbeitsachse verfahrbaren zweiten Schlitten verfahrbar sowie aus der Arbeitsachse herausschwenkbar gelagert. Diese beiden Schlitten sind unabhängig voneinander betätigbar, weil der Lochsucher zunächst in die Schraubstelle einfahren muß, dann aber die Schraubstelle freizugeben hat, weil der Schrauber selbst diese Position an der Schraubstelle einnehmen muß.

Es ist eine gemeinsame elektronische Steuereinrichtung für die Einstellung der Neigung der Führungsschiene, den Antrieb der Führungsrolle, den Antrieb des Lochsuchers, einen Antrieb des Schraubers und den Stellmotor im Einspeichzyklus vorgesehen. Diese gemeinsame elektronische Steinereinrichtung steuert sämtliche Elemente der Vorrichtung, und zwar einerseits deren Grundeinstellung und andererseits den Arbeitsablauf mit der jeweiligen Individualeinstellung der Arbeitsachse und der Schraubstelle an jedem einzelnen Nippel. Die Steuereinrichtung weist einen Computer auf, der einen Speicher besitzt, in welchem die erforderlichen Daten der verschiedenen Laufradtypen gespeichert sind. Auch der Antrieb der Führungsrolle wird über die Steuereinrichtung gesteuert. Die einzelnen Daten sind veränderbar, wenn dies der jeweilige Laufradtyp erfordert.

Die vorderen und die hinteren Zylinder sind in ihren Hüben und in ihrer Anordnung so aufeinander abgestimmt, daß sich die Führungsschiene aus einer horizontalen Mittelstellung entsprechend der Lage der Laufradebene nach beiden Seiten um einen Winkel von je etwa 7° verschwenken läßt. Die angegebenen 7° sind eine bevorzugte Schräglage der Speichen zur Laufradebene. Es reicht aus, diese beiden Schräglagen vorzusehen. Es können dann auch Laufräder mit Speichen in abweichender Schräglage eingespeicht werden, wobei die Nachstelleinrichtung über den Stellmotor dies ermöglicht.

Die Erfindung wird anhand eines bevorzugten Ausführungsbeispiels weiter erläutert und beschrieben. Es zeigen:
- Fig. 1: eine schematisierte Seitenansicht der Vorrichtung zum Einspeichen mit wesentlichen Elementen,
- Fig. 2: eine Draufsicht auf die Laufradebene mit den Führungsrollen für die Felge,
- Fig. 3: Elemente des Lochsuchers und
- Fig. 4: wesentliche Elemente des Schraubers.

Von dem Rahmen der Vorrichtung ist aus Übersichtlichkeitsgründen nur eine vordere maschinenfeste Säule 1 und eine hintere maschinenfeste Säule 2 dargestellt. An der Säule 1 ist ein Schlitten 3 vertikal geführt, der über zwei vordere Zylinder 4 und 5 höhenveränderlich angetrieben wird. Der vordere Zylinder 4 ist in ausgefahrenem Zustand dargestellt, weshalb seine Kolbenstange 6 sichtbar ist, die gelenkig am Schlitten 3 angreift. Der Zylinder 5 ist dagegen eingefahren, so daß seine Kolbenstange nicht sichtbar ist. Der Schlitten 3 trägt ein gelenkiges Lager 7 für die gelenkige Aufnahme bzw. Abstützung einer Führungsschiene 8, die sich in einer Mittelstellung (wie dargestellt) horizontal durch die gesamte Vorrichtung hindurch erstreckt und eine Arbeitsachse 9 definiert, in der ein Lochsucher 10, ein Positionieranschlag 11 und ein Schrauber 12 zum Aufdrehen des Nippels auf das mit Gewinde versehene Ende der betreffenden Speiche angeordnet sind bzw. wirken.

Im hinteren Bereich der Führungsschiene 8, also dem Lochsucher 10 abgekehrt, ist die Führungsschiene 8 prinzipiell ähnlich an einer zweiten Stelle aufgehängt bzw. geführt. An der Säule 2 ist ein Schlitten 13 vertikal beweglich vorgesehen. Für diese Vertikalbewegung ist ein erster hinterer Zylinder 14 und damit fluchtend ein zweiter hinterer Zylinder 15 vorgesehen. Der Zylinder 14 ist mit ausgefahrener Kolbenstange 16 dargestellt, während der Zylinder 15 sich in der eingefahrenen Stellung befindet. Die Führungsschiene 8 ist in diesem hinteren Bereich über ein Lager 17 an dem Schlitten 13 gelenkig aufgehängt, wobei das Lager 17 zusätzlich etwas Spiel in Richtung der Arbeitsachse 9 besitzt. Die Kolbenstange 16 des Zylinders 14 greift gelenkig an einem Träger 18 an und wirkt so über den Schlitten 13 auf das Lager 17. Der hintere Zylinder 15 ist in einem Auflager 19 ortsfest am nicht dargestellten Rahmen der Vorrichtung abgestützt. Der vordere Zylinder 5 dagegen besitzt ein Auflager 20, welches auf einer als Winkelhebel mit zwei verschieden langen Hebelarmen ausgebildeten Übersetzungseinrichtung 21 beweglich abgestützt ist. Zum Verdrehen bzw. Anheben des Auflagers 20 über die Übersetzungseinrichtung 21 ist ein Stellmotor 22 vorgesehen, dessen anderes Ende am Rahmen der Vorrichtung gelenkig und ortsfest abgestützt ist.

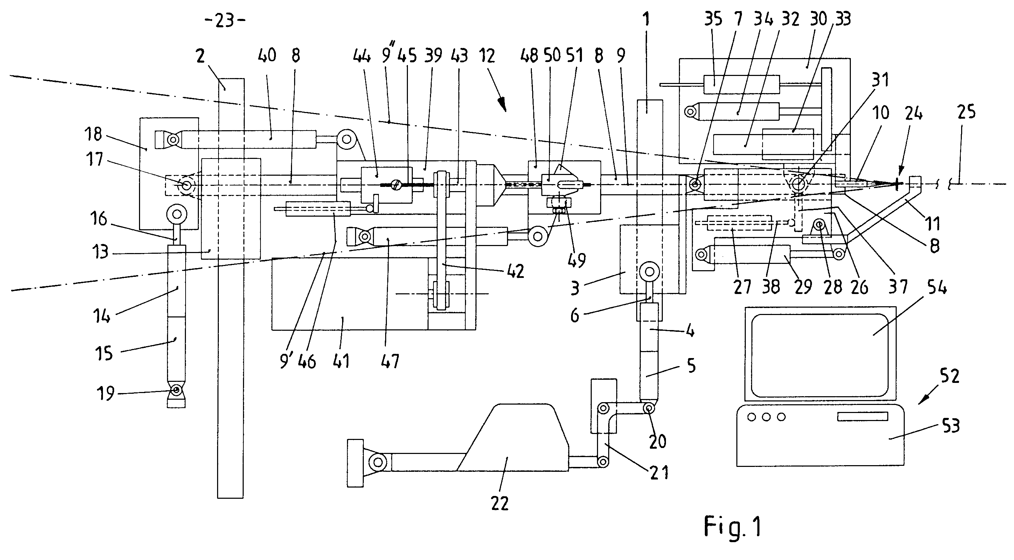

In Fig. 1 sind jeweils nur die Zylinder 4 und 14 betätigt bzw. ausgefahren. Die Führungsschiene 8 befindet sich in einer Mittelstellung, bei der die Arbeitsachse 9 etwa horizontal ausgerichtet angeordnet ist. Die hinteren Zylinder 14 und 15 weisen einen größeren Hub im Vergleich zu den vorderen Zylindern 4 und 5 auf. Die Zylinder 4 und 5 weisen einen gleichen, vergleichsweise kleinen Hub auf. Die Zylinder 14 und 15 weisen einen gleichen, vergleichsweise großen Hub auf. Damit wird erkennbar, daß die Führungsschiene 8 bei Betätigung der Zylinder 4, 5, 14 und 15 eine Schwenkbewegung in einer Vertikalebene 23 ausführt, die die Zeichenebene der Fig. 1 darstellt. Diese Schwenkbewegung erfolgt etwa um eine Schraubstelle 24, die im Anschluß an den Positionieranschlag 11, und zwar zwischen diesem und dem Lochsucher 10 gebildet ist und an der jeweils ein Nippel durch die nicht dargestellte Felge auf das betreffende Ende der jeweiligen Speiche aufgedreht wird.

Die verschiedenen Betätigungskombinationen der Zylinder 4, 5, 14 und 15 sind so aufeinander abgestimmt und werden so gesteuert, daß symmetrisch zu der dargestellten Mittelstellung mit etwa horizontaler Anordnung der Arbeitsachse 9 zwei winklige Stellungen möglich sind, wie sie in strichpunktierter Linienführung angedeutet sind. Wenn die Zylinder 4 und 14 aus der dargestellten Mittelstellung heraus entlüftet werden, fahren die Kolbenstangen 6 und 16 in die Zylinder 4 bzw. 14 ein, und die Führungsschiene 8 bzw. deren Arbeitsachse 9 nimmt dann eine Stellung ein, wie sie in strichpunktierter Linienführung als Arbeitsachse 9' dargestellt ist. Der Winkel zwischen diesen beiden Stellungen beträgt etwa 7°. Werden umgekehrt zusätzlich zu der Belüftung der Zylinder 4 und 14 noch die Zylinder 5 und 15 belüftet, dann verschwenkt die Arbeitsachse 9 in die andere Schräglage, so daß sich dann die Führungsschiene 8 und mit ihr die Arbeitsachse 9'' in der anderen Stellung befindet. In beiden Fällen wird die Führungsschiene 8 und mit ihr die Arbeitsachse 9 in der Vertikalebene 23 um die Schraubstelle 24 geschwenkt. Die Arbeitsachse 9 wird somit relativ zu einer Laufradebene 25 durch die entsprechende Betätigung der Zylinder 4, 5, 14 und 15 verschwenkt, und Zwar in einem Winkel von etwa 7° nach beiden Seiten, wie es oft der Schräglage der Speichen relativ zur Laufradebene 25 entspricht. Damit ergibt sich eine Grundeinstellung der Führungsschiene 8 und damit der Arbeitsachse 9 in Abstimmung auf die Schräglagen der Speichen der beiden Laufradseiten. In der dargestellten Mittelstellung fluchtet die Arbeitsachse 9 mit der Laufradebene 25, so daß in dieser Stellung Speichen eingezogen werden können, die keine Schräglage zu der Laufradebene 25 aufweisen. Über die Zylinder 4, 5, 14 und 15 wird eine Grundeinstellung herbeigeführt, bei der sich der Stellmotor 22 in einer Mittelstellung befindet.

Mit dem vorderen Ende der Führungsschiene 8, also der Schraubstelle 24 zugekehrt, ist ein Arbeitstisch 26 fest verbunden, auf dem eine gestrichelt dargestellte Wegmeßeinrichtung 27 angeordnet ist. Weiterhin ist auf dem Arbeitstisch 26 in einem Schwenklager 28 der Positionieranschlag 11 schwenkbar gelagert. Ein Zylinder 29 ist schwenkbar an dem Arbeitstisch 26 gelagert und greift andererseits gelenkig an dem Positionieranschlag 11 an, so daß dieser, wie dargestellt, in die Arbeitsstellung benachbart zu der Schraubstelle 24 eingeschwenkt und andererseits in eine Parkposition gegenüber der Laufradebene 24 abgesenkt werden kann.

Oberhalb der Führungsschiene 8 in dem der Schraubstelle 24 zugekehrten Bereich ist ein Schwenktisch 30 vorgesehen, der gegenüber der Führungsschiene 8 und damit auch gegenüber dem Arbeitstisch 26 um eine Querachse 31 in begrenztem Winkel schwenkbar ist. Die Querachse 31 ist etwa horizontal ausgerichtet, steht auf der Vertikalebene 23 senkrecht und schneidet die Arbeitsachse 9. Auf dem Schwenktisch 30 ist der Lochsucher 10 mit einem Gleitstück 32 in einem auf dem Schwenktisch 30 angeordneten Führungsabschnitt 33 geradlinig in der Arbeitsachse 9 geführt. Er kann mit einem Zylinder 34, dessen eines Ende gelenkig an dem Schwenktisch 30 angreift und dessen anderes Ende den Lochsucher 10 betätigt, in Richtung der Arbeitsachse 9 hin- und hergefahren werden, wobei dieser Hub dazu dient, die Spitze des Lochsuchers 10 letztlich in das Nippelloch einer nicht dargestellten Felge einzufahren, wobei unter Umständen noch ein Durchgangsloch an der Felge, z. B. bei einer Tiefbett-Hohlkammerfelge, zu durchfahren ist. Eine Wegmeßeinrichtung 35 dient der Aufnahme des Verfahrweges, den die Spitze des Lochsuchers 10 aus einer Ausgangsstellung in die eingefahrene Stellung im Nippelloch zurücklegt. Das Signal dieser Wegmeßeinrichtung dient dazu, in einem späteren Arbeitsschritt den Schrauber 12 so in der Arbeitsachse 9 zu verfahren, daß eine am Schrauber 12 vorgesehene Schrauberklinge Kontakt zu einem eingeschossenen Nippel an der Schraubstelle 24 bekommt. Der Lochsucher 10 ist nicht nur in der Arbeitsachse 9 hin- und herverfahrbar, sondern kann mit Hilfe eines nicht dargestellten Zylinders auch aus der Arbeitsachse 9 seitlich hinweggeschwenkt werden, damit der Schrauber 12 in an die Schraubstelle 24 vorgefahren werden kann, wenn ein eingeschossener Nippel auf das mit Gewinde versehene Ende der betreffenden Speiche aufgeschraubt werden soll.

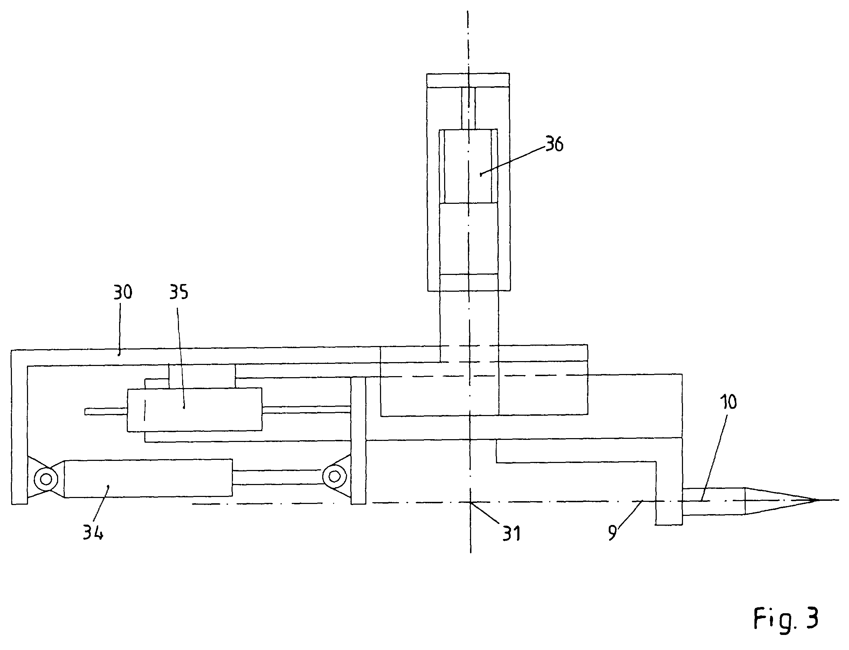

Fig. 3 zeigt einige Einzelelemente des Lochsuchers 10, und zwar eine Draufsicht von oben auf die Querachse 31. Es ist ein Zylinder 36 vorgesehen, um den Lochsucher 10 aus der Arbeitsachse 9 herauszufahren oder in diese Achse hineinzubringen. Wie Fig. 1 erkennen läßt, besitzt der Schwenktisch 30 einen Fortsatz 37, der gegen einen Fühler 38 der Wegmeßeinrichtung 27 anliegt. Die Wegmeßeinrichtung 27 gibt entsprechend der Verschwenkung des Schwenktisches 30 mit dem darauf sitzenden Lochsucher 10 beim Einfahren in ein Loch der Felge ein Signal ab, welches in verarbeiteter Form dazu dient, den Stellmotor 22 entsprechend zu betätigen, so daß das Auflager 20 um ein vergleichsweise geringes Maß zusätzlich angehoben oder abgesenkt wird, wodurch die Schräglage der Führungsschiene 8 mit der Arbeitsachse 9 aus der jeweiligen Grundeinstellung heraus nachgestellt wird. Dies dient zur Erfassung der jeweiligen genauen Lage des Nippelloches in der Felge, an der eine Speiche eingezogen werden soll. Diese Nippellöcher werden mit entsprechenden Toleranzen gebohrt. Beim Einfahren der Spitze des Lochsuchers 10 in das betreffende Nippelloch führt diese jeweilige Toleranz zu einem geringfügigen Verschwenken des Schwenktisches 30, so daß ein entsprechendes Signal an der Wegmeßeinrichtung 27 entsteht.

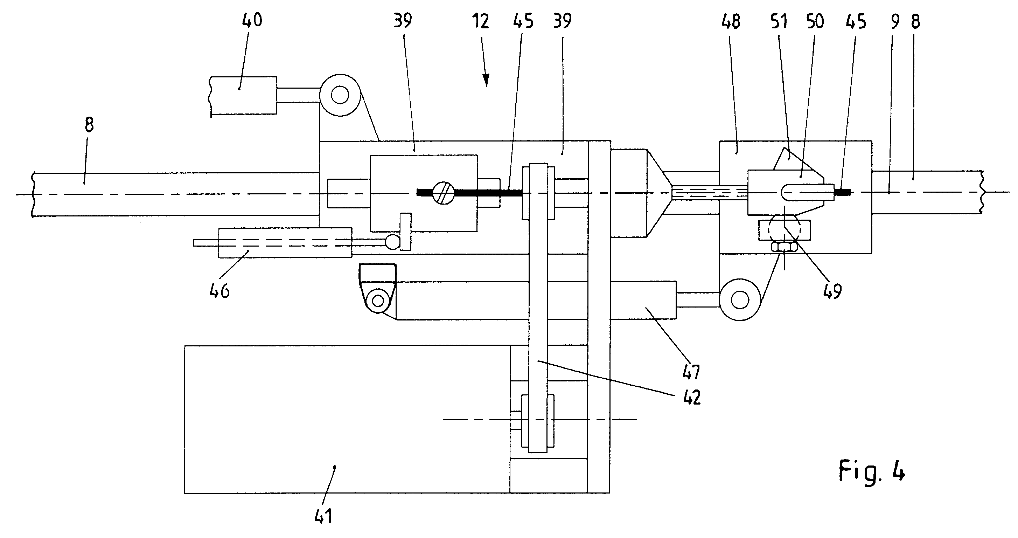

Der Schrauber 12, der in Fig. 1 und noch einmal in vergrößernder Darstellung in Fig. 4 gezeigt ist, weist einen Schlitten 39 auf, der gegenüber der Führungsschiene in Richtung der Arbeitsachse 9 verfahrbar angeordnet ist. Ein Zylinder 40, dessen anderes Ende gelenkig an dem Träger 18 abgestützt ist, dient der Einsteuerung dieser Bewegung. Auf dem Schlitten 39 sitzt ein Motor 41, der über einen Treibriemen 42 eine Schraubspindel 43 antreibt, die eine nicht dargestellte Schrauberklinge aufweist. Auf dem Schlitten 39 ist ein weiterer Schlitten 44 in Richtung der Arbeitsachse 9 geführt, an dem eine Drahtseele 45 befestigt ist, die durch die Schrauberklinge mittig hindurchragt. Eine Meßeinrichtung 46 dient der Erfassung des Weges, den die Schrauberklinge beim Schraubvorgang an der Schraubstelle 24 in Richtung der Arbeitsachse 9 zurücklegt. Die Meßeinrichtung 46 gibt ein diesbezügliches Signal ab, über welches der Motor 41, der die Schrauberklinge antreibt, stillgesetzt werden kann, so daß damit der Aufschraubvorgang jedes einzelnen Nippels auf jeder Speiche gezielt beendet werden kann. An dem Schlitten 39 sitzt weiterhin ein Zylinder 47 für einen Schlitten 48, der mit dem Schlitten 39 und relativ zu diesem in der Arbeitsachse 9 verfahrbar ist. Der Schlitten 48 trägt ausgerichtet zur Arbeitsachse 9, jedoch über ein Gelenk 49 begrenzt beweglich einen Nippelaufsetzkopf 50. Über einen Zufuhrstutzen 51 kann je ein Nippel in den Nippelaufsetzkopf 50 eingeschossen werden, wenn sich der Nippelaufsetzkopf 50 an der Schraubstelle 24 befindet. Die Schrauberklinge am vorderen Ende der Schraubspindel 43 wird dann in der Arbeitsachse 9 derart nach vorn bewegt, daß der Nippel erfaßt und aufgeschraubt wird.

Zur Steuerung der verschiedenen Einstellungen und der Bewegungsabläufe ist eine gemeinsame elektronische Steuereinrichtung 52 mit Computer 53 und Bildschirm 54 vorgesehen. Aus Übersichtlichkeitsgründen sind die entsprechenden Signal- und Steuerleitungen zu den einzelnen Elementen, also den Motoren, Zylindern u. dgl., nicht dargestellt. Fig. 4 zeigt in vergrößernder Darstellung wesentliche Elemente des Schraubers 12.

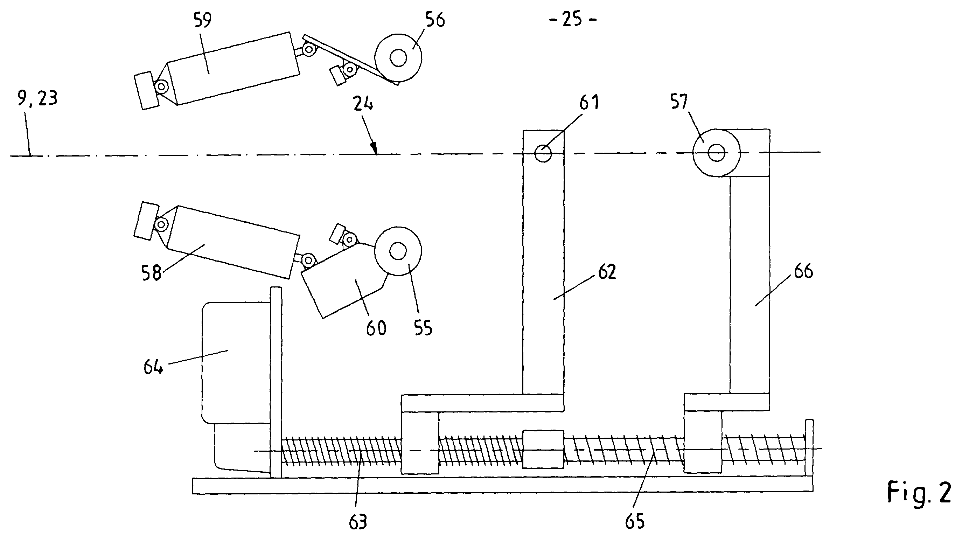

Fig. 2 zeigt die Anordnung von Elementen vor der Vorrichtung, und zwar eine Draufsicht auf die Laufradebene 25, in der die Felge mit etwa horizontal ausgerichteter Laufradebene 25 aufgespannt wird. Die Laufradebene 25 fällt hier mit der Zeichenebene der Fig. 2 zusammen, so daß Fig. 2 eine um 90° gegenüber Fig. 1 gedrehte Darstellung zeigt.

Die Laufradebene 25 wird durch drei Führungsrollen 55, 56 und 57 festgelegt. Die Laufradebene 25 und die Vertikalebene 23 stehen senkrecht aufeinander und schneiden einander in der Arbeitsachse 9. Dabei sind die ersten beiden Führungsrollen 55 und 56 auf der Seite der Schraubstelle 24 vorgesehen. Diese beiden Führungsrollen 55 und 56 sind symmetrisch gegenläufig zu der Vertikalebene 23 verstellbar. Hierzu dienen Zylinder 58 und 59. Die erste Führungsrolle 55 besitzt einen Antrieb 60, so daß auf diese Art und Weise die nicht dargestellte Felge gedreht werden kann. Die Einstellung der beiden Führungsrollen 55 und 56 zueinander erfolgt in Abhängigkeit von dem Laufradtyp, der hergestellt werden soll. Es ist eine Aufnahmeeinrichtung 61 vorgesehen, die auf einem Träger 62 sitzt, der mit Hilfe einer Gewindestange 63 über einen Motor 64 in Richtung der Arbeitsachse 9 relativ zu den Führungsrollen 55 und 56 verfahrbar ist. Die Aufnahmeeinrichtung 61 dient der Aufnahme und ungefähren Positionierung der nicht dargestellten Nabe und der Achse des Laufrades. Es versteht sich, daß die Speichen in die Nabenlöcher eingefädelt sind und einzeln auf den in Arbeitsstellung eingeschwenkten Positionieranschlag 11, der sich innerhalb der Felge befindet, aufgelegt werden.

Die dritte Führungsrolle 57 ist über eine mit der Gewindestange 63 gekuppelte Gewindestange 65 und mit einem Träger 66 in der Arbeitsachse 9 verfahrbar. Die Gewindestange 65 weist eine doppelt so große Steigung wie die Gewindestange 63 auf, so daß sich die Aufnahmeeinrichtung 61 immer etwa im Mittelpunkt der durch die drei Führungsrollen 55, 56 und 57 eingespannten Felge befindet, unabhängig von dem Durchmesser des jeweiligen Laufrades. Die dritte Führungsrolle 57 und die Aufnahmeeinrichtung 61 befinden sich in der Arbeitsachse 9 entsprechend der Mittelstellung der Führungsschiene 8 gemäß Fig. 1. Die Laufradebene 25 bleibt auch dann unverändert, wenn die Führungsschiene 8 in eine der beiden symmetrisch zu der Mittelstellung vorgesehenen Schräglagen überführt wird.

Der Arbeitsablauf der Vorrichtung kann wie folgt erfolgen:

Nachdem die Daten des betreffenden Laufradtyps in die Steuereinrichtung 52 eingegeben oder aus dieser gespeichert aufgerufen wurden, wird eine Felge in der Laufradebene 25 zwischen den drei Führungsrollen 55, 56 und 57 eingespannt und eine Nabe mit eingefädelten Speichen mit ihrer Achse in die Aufnahmeeinrichtung 61 eingefügt, so daß sich auch die Nabe in der Laufradebene 25 befindet. Die Laufradebene 25 ist horizontal ausgerichtet und nicht verstellbar.

Beim Aufsetzen und Aufdrehen der Nippel auf die Speichen wird im allgemeinen so vorgegangen, daß zunächst die Speichen einer Laufradseite eingespeicht werden. Es sei angenommen, daß diese Speichen eine Schräglage zu der Laufradebene 25 aufweisen. Über die Steuereinrichtung 52 werden die Zylinder 4, 5, 14 und 15 entsprechend angesteuert, so daß die Führungsschiene 8 und damit die Arbeitsachse 9 eine entsprechende Neigung zu der Laufradebene 25 einnimmt, wie dies in Fig. 1 verdeutlicht ist. Sodann wird an dem betreffenden ersten Loch in der Felge der Positionieranschlag 11 eingeschwenkt. Sodann wird der Lochsucher 10 in der Arbeitsachse 9 in dieses Nippelloch eingefahren, wobei je nach der Toleranz, mit der dieses Nippelloch gebohrt wurde, ein Signal an der Wegmeßeinrichtung 27 entsteht, welches über den Computer 53 verarbeitet wird und über die Steuereinrichtung 52 in einem Nachstellsignal auf den Stellmotor 22 gegeben wird. Damit wird die Schräglage der Arbeitsachse 9 geringfügig nachgestellt, wie es die jeweilige Toleranz des betreffenden Nippelloches erfordert. Anschließend wird der Lochsucher 10 zurückgezogen und aus der Arbeitsachse 9 herausgeschwenkt, worauf der Schrauber 12 in Tätigkeit gesetzt wird. Er wird in die Schraubstelle 24 eingefahren. Über den Zufuhrstutzen 51 gelangt ein einzelner Nippel in den Nippelaufsetzkopf 50. Anschließend wird die Schrauberklinge vorbewegt und der Nippel auf das Ende der ersten Speiche aufgedreht. Die Meßeinrichtung 46 gibt an die Steuereinrichtung 52 ein Signal zum Abschalten des Motors 41 für die Schraubspindel 43. Anschließend wird der Antrieb 60 der Führungsrolle 55 angesteuert und die Felge um den Lochabstand der betreffenden Laufradseite weitergedreht, so daß ein weiteres Loch der gleichen Laufradseite in den Bereich der Schraubstelle 24 kommt. Es wird dann wiederum der Lochsucher 10 in Funktion gesetzt, und es erfolgt das Aufschrauben des zweiten Nippels. Dies wird fortgesetzt, bis sämtliche Speichen einer Laufradseite aufgedreht sind. Sodann wird die Schräglage der Führungsschiene 8 und damit der Arbeitsachse 9 relativ zur Laufradebene 25 auf die andere Laufradseite, also entsprechend der Schräglage der Speichen der anderen Laufradseite, verändert, und es erfolgt das Einspeichen dieser Laufradseite. Es versteht sich, daß bei jedem Weiterdrehschritt von Nippelloch zu Nippelloch der Positionieranschlag 11 aus der Laufradebene 25 in eine Parkstellung verschwenkt wird, aus der er jeweils benachbart zu der Schraubstelle wieder eingeschwenkt wird, wenn eine neue Speiche durch ein Nippelloch hindurchgeführt werden soll.

### BEZUGSZEICHENLISTE

- 1: - Säule
- 2: - Säule
- 3: - Schlitten
- 4: - Zylinder
- 5: - Zylinder
- 6: - Kolbenstange
- 7: - Lager
- 8: - Führungsschiene
- 9: - Arbeitsachse
- 10: - Lochsucher
- 11: - Positionieranschlag
- 12: - Schrauber
- 13: - Schlitten
- 14: - Zylinder
- 15: - Zylinder
- 16: - Kolbenstange
- 17: - Lager
- 18: - Träger
- 19: - Auflager
- 20: - Auflager
- 21: - Übersetzungseinrichtung
- 22: - Stellmotor
- 23: - Vertikalebene
- 24: - Schraubstelle
- 25: - Laufradebene
- 26: - Arbeitstisch
- 27: - Wegmeßeinrichtung
- 28: - Schwenklager
- 29: - Zylinder
- 30: - Schwenktisch
- 31: - Querachse
- 32: - Gleitstück
- 33: - Führungsabschnitt
- 34: - Zylinder
- 35: - Wegmeßeinrichtung
- 36: - Zylinder
- 37: - Fortsatz
- 38: - Fühler
- 39: - Schlitten
- 40: - Zylinder
- 41: - Motor
- 42: - Treibriemen
- 43: - Schraubspindel
- 44: - Schlitten
- 45: - Drahtseele
- 46: - Meßeinrichtung
- 47: - Zylinder
- 48: - Schlitten
- 49: - Gelenk
- 50: - Nippelaufsetzkopf
- 51: - Zufuhrstutzen
- 52: - Steuereinrichtung
- 53: - Computer
- 54: - Bildschirm
- 55: - Führungsrolle
- 56: - Führungsrolle
- 57: - Führungsrolle
- 58: - Zylinder
- 59: - Zylinder
- 60: - Antrieb
- 61: - Aufnahmeeinrichtung
- 62: - Träger
- 63: - Gewindestange
- 64: - Motor
- 65: - Gewindestange
- 66: - Träger

## Patentansprüche

1. Vorrichtung zum Einspeichen eines Rades aus einer Felge, einer Nabe und einer Mehrzahl von Speichen und Nippeln, mit einer Aufnahmeeinrichtung (61) zum ungefähren Festlegen der Achse der Nabe, drei Führungsrollen (55, 56, 57) für eine drehbare Lagerung der Felge mit etwa horizontal angeordneter Laufradebene (25), einem in eine Schraubstelle (24) einschwenkbaren Positionieranschlag (11) für das mit Gewinde versehene Ende der Speiche sowie einem in einer Arbeitsachse (9) in Aufdrehrichtung verfahrbarer Schrauber (12) zum Aufdrehen der Nippel und einem angetriebenen Lochsucher (10) für die Löcher in der Felge, der in der gemeinsamen Arbeitsachse (9) des Schraubers (12) und des Positionieranschlages (11) verfahrbar und aus dieser Arbeitsachse (9) herausfahrbar vorgesehen ist, **dadurch gekennzeichnet**, daß eine relativ zu der durch die drei Führungsrollen (55, 56, 57) festgelegten Laufradebene (25) höhenveränderlich geführte Führungsschiene (8) zur Aufnahme des Schraubers (12) und des Lochsuchers (10) vorgesehen ist, die auf zwei in Richtung der Führungsschiene (8) beabstandet angeordneten Lagern (7, 17) schwenkbar gelagert ist, daß das der Schraubstelle (24) abgekehrte Lager (17) der Führungsschiene (8) auf zwei in Reihe angeordneten hinteren Zylindern (14, 15) maschinenfest abgestützt ist, daß das der Schraubstelle (24) zugekehrte Lager (7) der Führungsschiene (8) auf zwei in Reihe angeordneten vorderen Zylindern (4, 5) abgestützt ist, wobei die vorderen Zylinder (4, 5) auf einem Stellmotor (22) abgestützt sind, daß der Lochsucher (10) um eine Querachse (31) schwenkbar gegenüber der Führungsschiene (8) angeordnet und mit einer den Lochversatz ermittelnden Wegmeßeinrichtung (27) verbunden ist, und daß der Stellmotor (22) über das den Lochversatz wiedergebende Signal der Meßeinrichtung (27) zum Ausgleich des Lochversatzes durch Verschwenken der Führungsschiene (8) betätigbar ist.

2. Vorrichtung nach Anspruch 1, **dadurch gekennzeichnet**, daß die Querachse (31) und die Arbeitsachse (9) des Lochsuchers (10) einander schneidend angeordnet sind.

3. Vorrichtung nach Anspruch 1, **dadurch gekennzeichnet**, daß zwei der drei Führungsrollen (55, 56) benachbart zu der Schraubstelle (24) und die dritte Führungsrolle (57) mit ihrer Drehachse etwa die Arbeitsachse (9) schneidend angeordnet sind.

4. Vorrichtung nach Anspruch 3, **dadurch gekennzeichnet**, daß die beiden benachbart zu der Schraubstelle (24) angeordneten Führungsrollen (55, 56) symmetrisch zu einer Vertikalebene (23) durch die Arbeitsachse (9) verstellbar sind.

5. Vorrichtung nach Anspruch 3 und 4, **dadurch gekennzeichnet**, daß eine der Führungsrollen (55) benachbart zu der Schraubstelle (24) mit einem Antrieb (60) versehen ist.

6. Vorrichtung nach Anspruch 3, **dadurch gekennzeichnet**, daß die dritte Führungsrolle (57) und die Aufnahmeeinrichtung (61) für die Nabe in Richtung der Arbeitsachse (9) gemeinsam verstellbar sind, wobei die Aufnahmeeinrichtung (61) für die Nabe mit vergleichsweise halbem Verstellweg gekoppelt ist.

7. Vorrichtung nach Anspruch 1, **dadurch gekennzeichnet**, daß zwischen der Meßeinrichtung (27) für den Lochversatz und dem Stellmotor (22) für ein Auflager (20) der beiden vorderen Zylinder (4, 5) eine Übersetzungseinrichtung (21) vorgesehen ist.

8. Vorrichtung nach Anspruch 1, **dadurch gekennzeichnet**, daß der Schrauber (12) auf einem auf der Führungsschiene (8) in der Arbeitsachse (9) verfahrbaren ersten Schlitten (39) gelagert ist, und daß der Lochsucher (10) auf einem auf der Führungsschiene (8) in der Arbeitsachse (9) verfahrbaren zweiten Schlitten (30) verfahrbar sowie aus der Arbeitsachse (9) herausschwenkbar gelagert ist.

9. Vorrichtung nach Anspruch 5, **dadurch gekennzeichnet**, daß eine gemeinsame elektronische Steuereinrichtung (52) für die Einstellung der Neigung der Führungsschiene (8), den Antrieb (60) der Führungsrolle (55), den Antrieb des Lochsuchers (10), einen Antrieb (40, 41) des Schraubers (12) und den Stellmotor (22) im Einspeichzyklus vorgesehen ist.

10. Vorrichtung nach Anspruch 1, **dadurch gekennzeichnet**, daß die vorderen und die hinteren Zylinder (4, 5 bzw. 14, 15) in ihren Hüben und in ihrer Anordnung so aufeinander abgestimmt sind, daß sich die Führungsschiene (8) aus einer horizontalen Mittelstellung entsprechend der Lage der Laufradebene (25) nach beiden Seiten um einen Winkel von je etwa 7° verschwenken läßt.
